Europäisches Patentamt

**European Patent Office**

**Office européen des brevets**

(19)

(11) Numéro de publication: **0 010 498**

**B1**

(12)

# FASCICULE DE BREVET EUROPEEN

(45) Date de publication du fascicule du brevet: **20.01.82**

(51) Int. Cl.³: **G 01 C 7/04,** G 01 M 5/00, G 01 B 5/30, G 01 B 5/00

(21) Numéro de dépôt: **79400754.2**

(22) Date de dépôt: **17.10.79**

(54) Procédé et dispositif d'évaluation de la déformation d'une chaussée sous l'action d'une charge.

(30) Priorité: **24.10.78 FR 7830221**

(43) Date de publication de la demande:
**30.04.80 Bulletin 80/9**

(45) Mention de la délivrance du brevet:
**20.01.82 Bulletin 82/3**

(84) Etats contractants désignés:
**BE DE GB IT NL**

(56) Documents cités:
**FR - A - 2 076 423**
**FR - A - 2 099 726**

(73) Titulaire: **Etat Français Représenté par le Ministère de l'Environnement et du Cadre de Vie Laboratoire Central Des Ponts et Chaussees**
**58, Boulevard Lefebvre**
**F-75732 Paris Cédex 15 (FR)**

(72) Inventeur: **Brengarth, Michel**
**14, Rue Des Marronniers**
**F-33000 Bordeaux (FR)**

(74) Mandataire: **Hasenrader, Hubert**
**Cabinet BEAU DE LOMENIE 55, rue d'Amsterdam**
**F-75008 Paris (FR)**

Courier Press, Leamington Spa, England.

# Procédé et dispositif d'évaluation de la déformation d'une chaussée sous l'action d'une charge

La présente invention concerne un procédé d'évaluation de la déformation d'une chaussée sous l'effet d'une charge, du type selon lequel on déplace la dite charge sur la chaussée sur un parcours de longueur limitée et, durant ce déplacement, on mesure, d'une part, la distance entre ladite charge et un point fixe de la chaussée situé sur ledit parcours de la charge et, d'autre part, un paramètre géométrique de la chaussée à l'endroit dudit point fixe.

Selon un procédé connu (brevet français n° 1.552.070), on évalue la déformation d'une chaussée soumise à l'action d'une charge en mesurant la déflexion, — c'est-à-dire l'abaissement de niveau du fait de la charge — de la chaussée à l'endroit du point fixe, durant le déplacement de ladite charge le long de son parcours. Ce procédé nécessite l'utilisation d'une poutre qui doit présenter une longueur sensiblement égale à celle dudit parcours de la charge.

Il en résulte que ce procédé connu est de mise en oeuvre malaisée du fait de cette poutre encombrante.

De plus, lorsque l'on veut faire une série de mesures en des zones espacées le long d'une chaussée, il est nécessaire de déplacer la poutre successivement dans chacune de cès zones et ces déplacements successifs nécessitent des moyens de manutention spéciaux et importants du fait de la taille importante de cette poutre.

Par ailleurs, on connaît par le brevet français n° 2.099.726 un procédé selon lequel on évalue la déflexion d'une chaussée en mesurant la vitesse ou l'accélération vibratoire d'un point de cette chaussée soumise à l'effet du passage d'une charge. Un tel procédé ne permet pas d'obtenir un résultat utilisable car les paramètres mesurés (vitesse et accélération) sont trop faibles.

L'invention remédie à ces inconvénients et a notamment pour but de proposer un procédé du type susmentionné et qui soit susceptible d'être mis en oeuvre à l'aide d'un équipment peu encombrant, tout en présentant une sensibilité importante.

Ce but est atteint conformément à l'invention du fait que ledit paramètre géométrique est la pente d'un segment de chaussée sensiblement centré sur ledit point fixe et s'étendant sensiblement sur ledit parcours, ce segment ayant une longueur constante et au plus égale à

$$\frac{1}{n}$$

fois celle du parcours de la charge, avec $n \geqslant 5$, et que l'on utilise les valeurs mesurées de cette pente pour en déduire au moins l'un des paramètres suivants:déflexion maximale du profil de deformation de la chaussée sous l'effet de la charge, rayon de courbure de ce profil à l'endroit de la déflexion maximale, et rayon de charge de ce profil.

Ainsi, selon ce procédé, lorsque la longueur du segment est petite devant celle du parcours de la charge, on mesure et on trace non pas la courbe de la déflexion elle-même de la chaussée sous l'effet de la charge, en fonction de la position de cette dernière, mais la courbe dérivée première de cette courbe. Cette courbe dérivée permet d'obtenir facilement:la valeur de la déflexion maximale du profil déformé de la chaussée à l'endroit de la charge, la valeur du rayon de courbure de ce profil à l'endroit de la déflexion maximale, et le rayon de charge $r$.

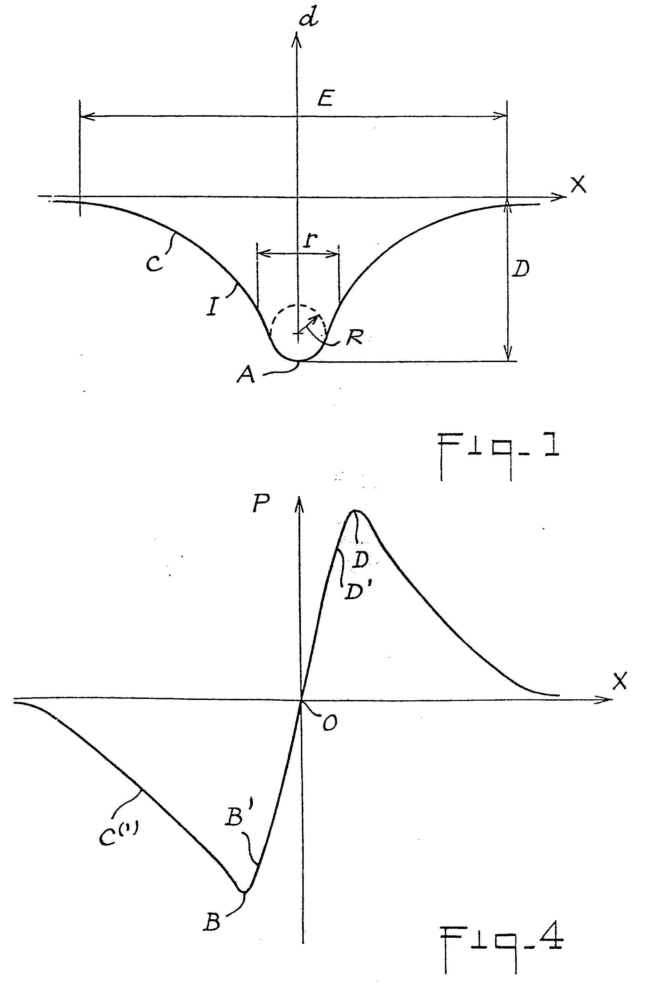

Sur la figure 1, on a représenté sous la référence C un profil symétrique de déformation d'une chaussée élastique sous l'effet d'une charge dont la zone d'application sur la chaussée est centrée au point référencé A sur cette figure 1. Pour plus de clarté, on a amplifié le profil C dans le sens vertical.

Sur cette figure 1, D désigne la déflexion maximale de la chaussée, R le rayon de courbure du profil C à l'endroit de la déflexion maximale, c'est-à-dire au point A, et $r$ désigne le rayon de charge, c'est-à-dire l'étendue suivant l'axe X horizontal et parallèle au déplacement de la charge, de la partie parabolique du profil C.

Le procédé de l'invention est avantageusement mis en oeuvre au moyen d'un équipement qui est caractérisé conformément à l'invention, en ce qu'il comprend une charge comprenant deux organes de section circulaire et d'axes parallèles roulant sur la chaussée, espacés l'un de l'autre transversalement à leur déplacement et reliés mécaniquement entre eux, de manière à maintenir constant leur écartement, des moyens pour mesurer le déplacement desdits organes sur la chaussée, un capteur d'inclinaison par rapport à une direction fixe, ce capteur étant monté sur un support qui est posé sur la chaussée en un point situé sur un axe parallèle aux déplacements desdits organes roulants et passant entre ces organes, et une mémoire pour enregistrer au moins certaines des valeurs d'inclinaison fournies par le capteur d'inclinaison, en fonction des valeurs du déplacement de la charge sur la chaussée.

Le procédé de l'invention est avantageusement mis en oeuvre au moyen d'un dispositif qui est caractérisé conformément à l'invention, en ce qu'il comprend un essieu comportant au moins deux roues coaxiales et espacées latéralement l'une de l'autre, un capteur de l'angle de rotation de l'une des roues, un capteur d'inclinaison par rapport à une direction fixe, ce capteur étant monté sur un support, des moyens reliant ledit support audit essieu pour effectuer au moins un cycle d'opérations comprenant les opérations suivantes, dans l'ordre chronologique:maintenir ce support au-dessus de la chaussée, déplacer ce support transversalement audit essieu jusqu'à une première position prédéterminée espacée vers l'avant par rapport à l'essieu, abaisser le support jusqu'à ce qu'il repose librement sur la chaussée, et soulever ce support au dessus de la chaussée, lorsque ledit support a atteint une deuxième position prédéterminée espacée vers l'arrière, par rapport à l'essieu.

D'autres caractéristiques et avantages de l'invention seront mieux compris à la lecture de la description qui va suivre d'un exemple de réalisation et en se référant aux dessins annexés sur lesquels:

— la figure 1, déjà décrite, est un graphique d'un profil de déformation d'une chaussée sous l'effet d'une charge;

— la figure 2 est une vue schématique en plan d'un équipement de mesure selon un mode de réalisation de l'invention;

—la figure 3 est une vue schématique latérale en élévation de la figure 2;

— la figure 4 est un graphique d'une courbe obtenue à l'aide d'un équipement conforme à l'invention;

— la figure 5 est une vue schématique en élévation d'un dispositif de mesure automatique ou semi-automatique selon un mode de réalisation de l'invention; et

— la figure 6 est une vue de détail de la figure 5.

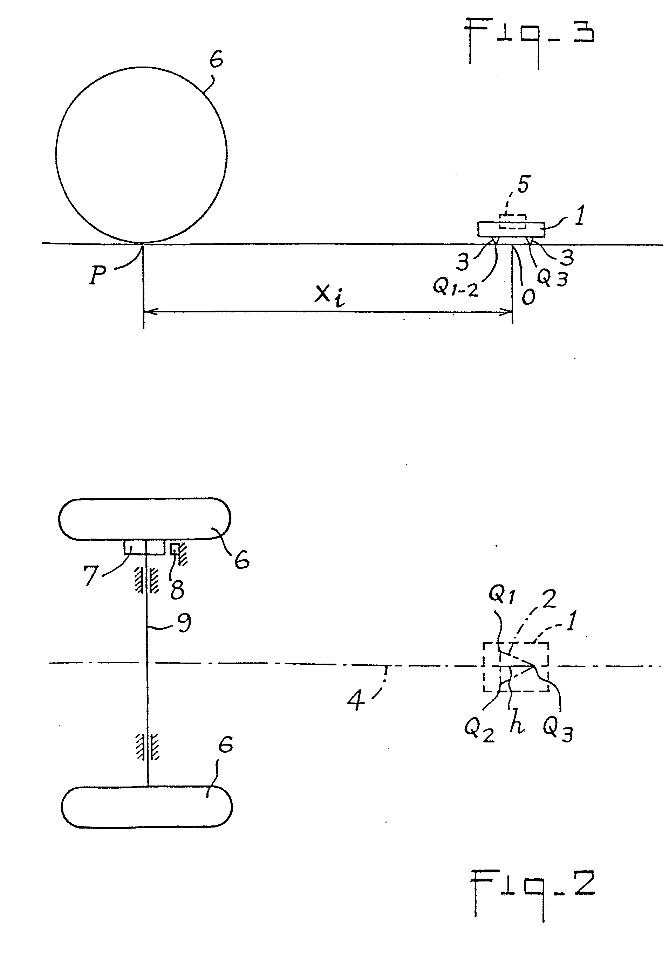

Selon l'exemple représenté, le dispositif comprend une plaque métallique rectangulaire de faibles dimensions I qui repose sur la chaussée sur trois pointes 3 dont les sommets $Q_1$, $Q_2$, $Q_3$ forment un triangle isocèle 2 dont la hauteur-axe de symétrie "h", de longueur égale typiquement à quelques centimètres, est orientée selon l'axe longitudinal 4 de la chaussée (figure 2). La hauteur "h" de ce triangle constitue la matérialisation du petit segment de chaussée dont on va mesurer les variations de pentes à l'approche de la charge. Pour cela on utilise un capteur de mesure angulaire 5 incorporé dans la plaque 1; l'ensemble 1, 3, 5 constitue un petit appareil en forme de parallélépipède rectangle désigné dans la suite de la description par le terme capteur de pente. Le faible encombrement du capteur de pente (dimensions typiques: longueur = 10 cm, largeur = 3 cm, hauteur 3 cm) permet un passage facile entre deux pneumatiques 6 d'un jumelage arrière de camion constituant la charge. Ces dimensions donnent une idée de la maniabilité et donc de la facilité de mise en oeuvre de la présente invention.

Le capteur de mesure angulaire 5 utilisé est un inclinomètre de haute précision, par exemple celui qui est mis dans le commerce sous la marque "SCHAEVITZ". Cet inclinomètre a, de préférence, une résolution inférieure à 1/10 seconde d'arc, soit 1/36 000 de degré angu-laire avec une bonne reproductibilité (écart de linéarité inférieur à 0,02% de l'échelle).

Le déplacement de la charge 6 le long de l'axe 4 est mesuré par un capteur de type connu 7,8 mesurant l'angle de rotation des roues 6.

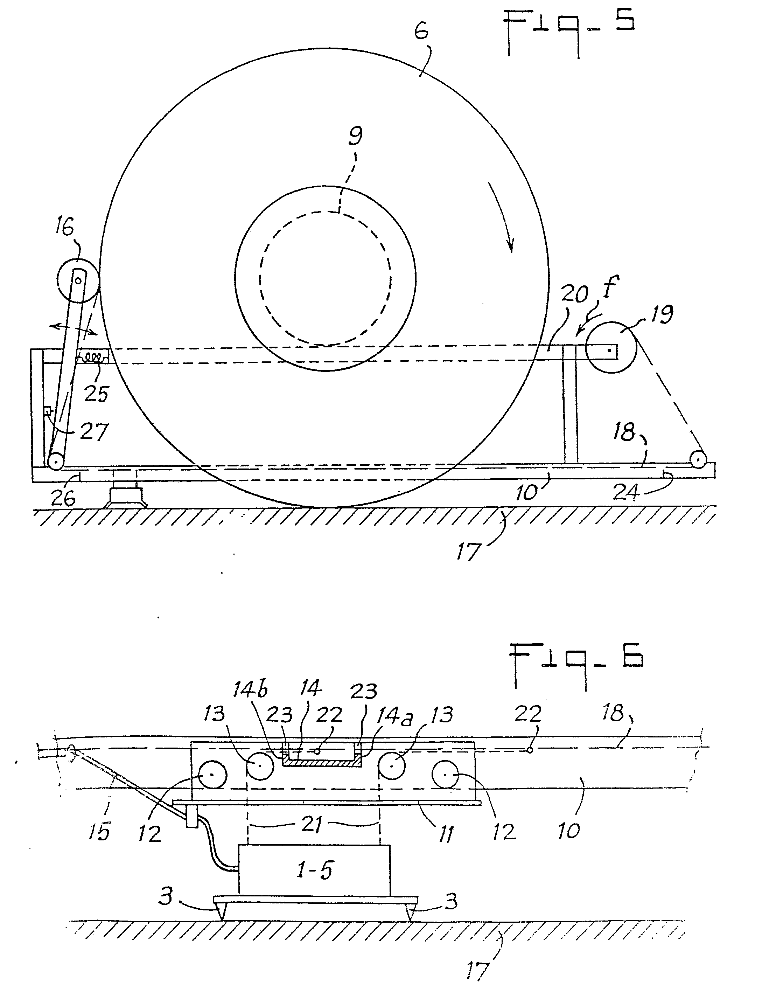

Les roues 6, jumelées au moyen d'un essieu 9, constituent le train arrière d'un camion. Ce camion est muni d'un système de mesure électrique des distances parcourues (par exemple le dispositif 7, 8) et on le recule ou l'avance de telle façon que les deux pneus du jumelage arrière 6,9 passent de part et d'autre au droit du capteur de pente 1, 3, 5. L'appareil 5 a une faible consommation et il est alimenté par piles. Sur un enregistreur bicoordonnées, (dit enregistreur XY), on enregistre la courbe d'influence correspondant aux déplacements X des roues 6 du camion en abscisse et aux variations d'angle (ou de pente) "p" en ordonnée. On obtient la courbe C(') représentée à la figure 4.

Lorsque les roues 6 du camion sont en P, le capteur de pente 1, 3, 5 mesure un angle ayant pour tangente le rapport de la différence des déflexions de ces appuis $d(Q_3) - d(Q_2$ ou $Q_1)$ à la différence des abscisses de ces points $\Delta X = X_{Q3} - X_{Q2}$ ou $Q_1$ et on a donc

$$Pi = \frac{\dfrac{d(Xi + \Delta X) - d(Xi - \Delta X)}{2} \qquad \dfrac{}{2}}{\Delta X}$$

Xi étant l'abscisse du point P (figure 3).

La base "h" de l'appareil étant de faible dimension par rapport à l'étendue suivant X, E de la déformation du profil de la chaussée sous l'effet de la charge (figure 1), on peut considérer que $\Delta X$ est petit et que la valeur de l'angle mesuré "p" est voisine de la valeur de la dérivée de la fonction d(X) pour la valeur Xi du déplacement $\Delta X$.

Lorsque X varie, on enregistre la courbe physique de la dérivée de la déflexion d(X).

En conclusion, le capteur de pente 1, 3, 5 donne en tout point de la courbe C la valeur de la dérivée de la fonction déflexion par rapport au déplacement de la charge d(X).

La courbe de la valeur "p" donnée par le capteur de pente en fonction de X (figure 4) présente les caractéristiques suivantes:

— Elle présente un minimum B à tangente horizontale correspondant à:dérivée seconde d(") (X) = O correspondant bien au point d'inflexion I de la courbe C de déflexion d (X);

— Elle s'annule au point O qui est situé au droit de l'appareil 1, 3, 5;

— De B en O la courbe C(') est quasiment rectiligne et d(') (X) varie linéairement en fonction de l'abscisse X, donc d (") (X) est constante, ce qui entraîne que la courbe de déflexion d (X) est bien parabolique de I en A.

Il en est de même pour la partie symétrique OD de la courbe C(').

De ces caractéristiques, on peut déduire les paramètres suivants:

—le coefficient angulaire ou pente

$$\frac{\Delta p}{\Delta X}$$

de la partie linéaire de la courbe C(') est égal à l'inverse du rayon de courbure "R" de la flache parabolique au droit du capteur de pente (figure 1).

— On a constaté que la variation d'abscisses $r$ de la partie rigoureusement linéaire B'D' est constante quel que soit le type de chaussée considéré mais avec le même jumelage. Il s'agit du rayon de charge du jumelage.

— L'intégration de la courbe C (') par simple planimétrie permet de calculer la déflexion maximale "D". Le résultat pourrait d'ailleurs être directement obtenu à l'aide d'un module intégrateur placé dans la chaîne de mesures.

Par rapport au procédé connu, le procédé de l'invention utilisant un capteur de pente 1, 3, 5 présente les avantages suivants:

— un faible encombrement, une bonne sensibilité; avance ou recul et dépassement faciles du capteur 1, 3, 5 par le ou les essieu (x) chargé (s); facilité d'interprétation des résultats.

— On peut aussi réaliser les mesures à plusieurs niveaux sous la chaussée en descendant le capteur 1, 3, 5 à ces niveaux après forage de la chaussée.

On peut réaliser des études relatives à des pneumatiques et charges spéciales ainsi que des structures particulièrement rigides à larges flaches du fait de la bonne sensibilité du capteur et de la facilité de manoeuvre qui permet de le placer loin de la charge.

Dans une étude de structure de chaussée portuaire extrêmement rigide, on a mesuré avec des charges de 85 tonnes à 4 roues des flaches dont l'étendue E était de plus de 20 mètres. Pour ce type d'engin on a trouvé un rayon de charge pour un jumelage de 25 tonnes égal à 0,60 m.

Du fait de l'extrême sensibilité du capteur 1, 3, 5, il est préférable que ce capteur ne bouge pas pendant la mesure.

On utilise un système de translation et de centrage du capteur supprimant toutes manutentions et manoeuvres délicates. Un premier montage peut consister à utiliser la poutre de translation du déflectographe Lacroix (Brevet français n° 1.552.070) en suspendant le capteur de pente 1, 3, 5 à une potence placée en bout de bras avec un système de levage pendant la translation de la poutre, l'appareil reposant librement sur la chaussée pendant les mesures. Mais on a préféré réaliser un montage indépendant du déflectographe Lacroix (figures 5 et 6) et pouvant équiper n'importe quel camion. Ce montage comprend (voir figures 5 et 6):

— un rail de translation et de guidage 10, typiquement de 1,40 mètre de longueur, fixé dans l'axe du jumelage au pont arrière du camion — et non au châssis du camion — de façon à avoir un faible débattement par rapport à la chaussée du fait seulement de l'élasticité des pneumatiques.

— Un chariot 11 monté sur galets 12 peut rouler sur le rail 10. Il est muni de poulies 13 et de butées d'entraînement 14a et 14b.

— un système de treuils et câbles, décrit plus en détail ci-dessous, assure le chariotage et donc le déplacement et le levage du capteur de pente 1, 3, 5.

— les conducteurs électriques d'alimentation et de sortie 15 du capteur de pente s'enroulent sur une poulie non représentée d'un treuil arrière de déplacement 16 avec sorties axiales.

— Des minicontacteurs placés sur le rail 10 réalisent les commandes de mouvement.

— L'enregistreur bicoordonnées est placé dans la cabine du camion.

Pendant la mesure, le capteur 1, 3, 5 repose librement sur la chaussée 17 grâce à l'action du treuil mécanique arrière 16 qui est entraîné par la roue 6 du camion de manière à maintenir une nulle sur en câble principal 18.

En fin de mesure le capteur 1, 3, 5 se relève automatiquement et il est déplacé vers l'avant des roues 6 du camion pour être prêt à effectuer une autre mesure. Mais dans cette dernière position, il ne sera posé sur la chaussée que par commande volontaire de l'opérateur (bouton-poussoir) sur un nouveau point de messure. Le système est donc semi automatique en ce sens que l'opérateur assis dans la cabine doit intervenir au début des mesures.

Le fonctionnement du dispositif représenté aux figures 5 et 6 est le suivant:

Le capteur de pente 1, 3, 5 est élevé au-dessus de la chaussée 17 et déplacé horizontalement vers la droite sur les figures 1 et 2 par la mise en rotation dans le sens de la flèche f (figure 5) d'un tambour de treuil 19 monté à l'extrémité avant d'un châssis 20 de support du rail 10; cette mise en rotation est effectuée à partir d'un moteur électrique non représenté par l'intermediaire d'un embrayage progressif également non représenté. Le capteur de pente 1, 3, 5 est relié au câble 18 par des câbles dits de levage 21 qui passent chacun autour d'une poulie 13 correspondante et qui sont chacun attachés au câble principal 18 par une olive 22. Le câble 18 passe dans des ouvertures 23 de section légèrement supérieure à celle dudit câble 18, ces ouvertures étant alignées entre elles et étant ménagées dans les ailes d'une pièce de butée en U fixée au chariot 11. Lors de la mise en rotation du tambour 19, le câble principal 18 est déplacé vers la droite; les câbles de levage 21 qui étaient mous sont d'abord tendus; puis le capteur de pente est soulevé de la chaussée jusqu'à ce qu'une olive 22 soit arrêtée par une ouverture 23 à travers laquelle elle ne peut pas passer. Le câble 18 continuant à être entraîné, le chariot 11 est donc entraîné vers la droite jusqu'à une position en fin de course avant pour laquelle il actionne un minicontacteur avant 24 qui commande alors l'arrêt du moteur d'entraînement du tambour 19 et le débrayage de ce tambour qui devient alors fou; le capteur de pente descend alors de son propre poids et se pose sur la chaussée 17. Lors de la mesure, le camion avance l'appareil 1, 3, 5 restant fixe sur la chaussée. Le chariot 11 est entraîné vers l'arrière par rapport à l'essieu 9 de manière à rester toujours au-dessus dudit appareil 1, 3, 5, les câbles étant mous. Ce mouvement du chariot est obtenu par l'action du treuil arrière 16 qui entraîne le câble 18 vers la gauche sur les figures 1 et 2 en synchronisme avec le déplacement du camion, l'olive 22 butant cette fois contre l'aile 14b de la pièce de butée 14. Le tambour de treuil 16 est maintenu contre la périphérie d'une roue 6 par un ressort 25 (figure 5). Lorsque le chariot atteint une position de fin de course arrière sur le rail 10, il déclenche un minicontacteur 26 (figure 5) qui alimente un électroaimant 27 désaccouplant le tambour 16 de la roue 6 et mettant en route le moteur électrique d'entraînement du tambour de treuil avant 19. Un nouveau cycle peut alors commencer.

**Revendications**

1. Procédé d'évaluation de la déformation d'une chaussée (17) sous l'effet d'une charge (6), du type selon lequel on déplace ladite charge sur la chaussée sur un parcours de longueur limitée et, durant ce déplacement, on mesure, d'une part, la distance (Xi) entre ladite charge et un point fixe (O) de la chaussée situé sur ledit parcours de la charge et, d'autre part, un paramètre géométrique de la chaussée à l'endroit du dit point fixe.
caractérisé en ce que ledit paramètre géométrique est la pente d'un segment linéaire de chaussée $(Q_{1-2}—Q_3)$ sensiblement centré sur ledit point (O) et s'étendant sensiblement dans la direction dudit parcours, ce segment ayant une longueur au plus égale à

$$\frac{1}{n}$$

fois celle du parcours de la charge, avec $n \geqslant 5$, et en ce qu'on utilise les valeurs mesurées de cette pente pour en déduire au moins l'un des paramètres suivants:déflexion maximale (D) du profil de déformation de la chaussée sous l'effet de la charge, rayon de courbure (R) de ce profil à l'endroit de la déflexion maximale, et rayon de charge $r$ de ce profil.

2. Equipment pour la mise en oeuvre du procédé selon la revendication 1, du type comprenant une charge (6, 9) roulant sur la chaussée (17) et des moyens pour déplacer cette charge sur la chaussée suivant une certaine trajectoire, caractérisé en ce qu'il comprend:des moyens (7, 8) pour mesurer la longueur du déplacement de ladite charge sur la chaussée, un capteur (5) d'inclinaison par rapport à une direction fixe, ce capteur étant monté sur un support (1) qui est posé sur la chaussée en un point situé sensiblement sur ladite trajectoire de déplacement de ladite charge, et une mémoire pour enregistrer au moins certaines des valeurs d'inclinaison fournies par le capteur d'inclinaison, et les valeurs de déplacement correspondantes de la charge sur la chaussée.

3. Dispositif pour la mise en oeuvre du procédé selon la revendication 1, du type comprenant un essieu (9) comportant au moins deux roues (6) coaxiales et espacées latéralement l'une de l'autre, caractérisé en ce qu'il comprend un capteur (7, 8) de l'angle de rotation de l'une des roues, un capteur (5) d'inclinaison par rapport à une direction fixe, ce capteur étant monté sur un support (1), des moyens dits de translation et de centrage (10 à 16 et 18 à 27) reliant ledit support audit essieu.

4. Dispositif selon la revendication 3, caractérisé en ce que les moyens de translation et de centrage comprennent:
— une glissière (10) montée sur ledit essieu (9) et s'étendant parallèlement au déplacement de l'essieu;
— un chariot (11) monté mobile par rapport à et le long de ladite glissière (10) entre deux positions extrêmes de fin de course;
— des moyens souples de levage (21) reliant le chariot (10) au support (1) du capteur d'inclinaison (5);
— des moyens de commande (14, 18, 19, 22 et 23) pour commander le déplacement du chariot (10) de sa position extrême arrière à sa position extrême avant;
— des moyens (16, 25, 6) pour déplacer ledit chariot de sa position extrême avant à sa position extrême arrière, ce déplacement étant synchrone avec celui de l'essieu sur la chaussée de telle sorte que le mouvement relatif du chariot par rapport à la chaussée (17) soit nul;
— des moyens de commande (14, 18, 19, 22, 23, 24, 26) agissant sur les moyens souples de levage (21) pour commander le soulèvement du capteur d'inclinaison (5) en position haute par rapport à la chaussée (17) alors que le chariot (11) se trouve dans sa position extrême arrière, pour maintenir ledit capteur dans sa position haute durant le déplacement du chariot jusqu'à sa position extrême avant et pour commander la descente du capteur jusqu'à une position basse pour laquelle ce dernier repose librement sur la chaussée, lorsque le chariot se trouve en position extrême avant.

**Patentansprüche**

1. Verfahren zur Bewertung der Verformung einer Straße (17) unter der Wirkung einer Last (6), wobei die Last auf der Straße auf einem Weg begrenzter Länge verschoben und während dieser Verschiebung gemessen wird: einerseits der Abstand (Xi) zwischen der Last und einem auf dem Weg der Last befindlichen Festpunkt (O) der Straße und andererseits ein geometrischer Parameter der Straße an der Stelle des Festpunkts. dadurch gekennzeichnet, daß der geometrische Parameter die Neigung eines geradlinigen Straßenabschnitts $(Q_{1-2}—Q_3)$ ist, der im wesentlichen auf den Festpunkt (O) zentriert ist und sich im wesentlichen in der Richtung des Wegs erstreckt, daß die Länge des Straßenabschnitts höchstens gleich dem 1/n-fachen der Länge des Wegs der Last ist, wobei $n \geqslant 5$ ist, und daß die gemessenen Werte dieser Neigung verwendet werden, um daraus wenigstens einen der folgenden Parameter abzuleiten: maximale Versetzung (D) des Verformungsprofils der Straße unter der Wirkung der Last, Krümmungsradius (R) dieses Profils an der Stelle der maximalen Versetzung, Belastungsbereich (r) dieses Profils.

2. Vorrichtung zur Durchführung des Verfahrens nach Anspruch 1, mit einer auf der Straße (17) rollenden Last (6, 9) und mit einer Einrichtung zum Verschieben der last auf der Straße längs eines gegebenen Wegs, gekennzeichnet durch eine Einrichtung (7, 8) zum Messen der Länge der Verschiebung der Last auf der Straße, durch einen Neigungsgeber (5) zur Messung der Neigung gegenüber einer feststehenden Richtung, wobei der Neigungsgeber an einem Träger (1) befestigt ist, der an einem Punkt auf die Straße gestellt ist, der im wesentlichen auf dem Verschiebungsweg der Last liegt, und durch einen Speicher zum Registrieren wenigstens gewisser durch den Neigungsgeber gelieferter Neigungswerte und der entsprechenden Verschiebungswerte der Last auf der Straße.

3. Vorrichtung zur Durchführung des Verfahrens nach Anspruch 1, mit einer Achse (9) einschließlich wenigstens zweier koaxialer und seitlich im Abstand angeordneter Räder (6), gekennzeichnet durch einen Drehwinkelgeber (7, 8) für eines der Räder, durch einen Neigungsgeber (5) zur Messung der Neigung gegenüber einer feststehenden Richtung, wobei der Neigungsgeber an einem Träger (1) befestigt ist, und durch Translations- sowie Zentriereinrichtungen (10 bis 16, 18 bis 27) die den Träger mit der Achse verbinden.

4. Vorrichtung nach Anspruch 3, dadurch gekennzeichnet, daß die Translations- und Zentriereinrichtungen aufweisen:
— eine Gleitbahn (10), die an der Achse (9) befestigt ist und sich parallel zur Verschiebung der Achse erstreckt,
— einen Wagen (11), der zwischen zwei Hubendstellungen beweglich und längs der Gleitbahn (10) angeordnet ist,
— eine biegsame Hubeinrichtung (21), die den Wagen (10) mit dem Träger (1) des Neigungsgebers (5) verbindet,
— eine Steuereinrichtung (14, 18, 19, 22 und 23) zur Steuerung der Verschiebung des Wagens (10) von seiner hinteren Endstellung in seine vordere Endstellung,
— eine Einrichtung (16, 25, 6) zur Verschiebung des Wagens von seiner vorderen Endstellung in seine hintere Endstellung, wobei diese Verschiebung mit denjenigen der auf der Straße befindlichen Achse derart synchronisiert ist, daß die Relativbewegung des Wagens gegenüber der Straße (17) gleich Null ist, und
— eine auf die biegsame Hubeinrichtung (21) wirkende Steuereinrichtung (14, 18, 19, 22, 23, 24, 26) zur Steuerung des Anhebens des Neigungsgebers (5) in eine gegenüber der Straße (17) hohe Stellung, während sich der Wagen (11) in der hinteren Endstellung befindet, zum Halten des Gebers in seiner hohen Stellung während der Verschiebung des Wagens bis in seine vordere Endstellung, und zur Steuerung des Absenkens des Neigungsgebers bis in eine tiefe Stellung, in der letztere frei auf der Straße ruht, während sich der Wagen in seiner vorderen Endstellung befindet.

## Claims

1. Method to asses the deformation of a road surface (17) under the effect of a load (6) of type wherein the said load is moved on the road surface over a distance of limited length and during this displacement, there are measured, on the one hand, the distance (Xi) between the said load and a fixed point (O) of the road surface situated on the path travelled by the load, and on the other hand, a geometrical parameter of the road surface where the said fixed point is situated, characterized in that the said geometrical parameter is the slope of a linear segment of road surface $(Q_{1-2}—Q_3)$ substantially centred on the said point (O) and extending substantially in the direction of the said path, said segment having a length at the most equal to

$$\frac{1}{n}$$

times that of the path travelled by the load, with $n \geqslant 5$, and in that the values measured for that slope are used to deduce therefrom at least one of the following parameters: maximum deflection (D) of the deformation profile of the road surface under the effect of the load, radius of curvature (R) of this profile where the deflection is maximum, and load radius $r$ of said profile.

2. Equipment for performing the method according to claim 1, of the type comprising a load (6, 9) travelling on the road surface (17) and means for moving said load over said road surface following a certain path, characterized in that it comprises: means (7, 8) to measure the length of the distance travelled by the said load over the road surface, detecting means (5) to detect an inclination with respect to a fixed direction, said detecting means being mounted on a support (1) which is placed on the road surface in one point situated substantially on the said path travelled by the said load, and a memory for recording at least certain inclination values supplied by the detecting means, and the corresponding displacement values of the load on the said surface.

3. Device for performing the method according to claim 1, of the type comprising an axle (9) with at least two co-axial wheels (6) spaced laterally apart, characterized in that it comprises means (7, 8) for detecting the angle of rotation of one of the wheels, detecting means (5) for detecting any inclination with respect to a fixed direction, said detecting means being mounted on a support (1), translation and centering means (10 to 16 and 18 to 27) connecting the said support to the said axle.

4. Device according to claim 3, characterized in that the translation and centering means comprise:

— a guide (10) mounted on the said axle (9) and extending in parallel to the movement of the axle;

— a carriage (11) mounted for moving with respect to and along the said guide (10) between two end-of-travel positions;

— supple lifting means (21) connecting the carriage (10) to the support (1) of the inclination detecting means (5);

— means (14, 18, 19, 22 and 23) for controlling the movement of the carriage from its rearmost end position to its foremost end position;

— means (16, 25, 6) for moving the said carriage from its foremost end position to its rearmost end position, said movement being synchronous with that of the axle on the road surface so that the relative movement of the carriage with respect to the road surface (17) is nil;

— control means (14, 18, 19, 22, 23, 24, 26) actuating the supple lifting means (21) to control the lifting of the inclination detecting means (5) to a high position with respect to the road surface (17) whereas the carriage (11) is in its rearmost end position, and to hold said detector in its high position whilst the carriage moves to its foremost end position, and to control the lowering of the said detector to a low-down position in which said detector is resting on the road surface, when the carriage is in its foremost end position.

Fig-1

Fig-4

Fig. 3

6

5

1

3

$Q_{1-2}$

$x_i$

P

O

$Q_3$

3

7

8

6

9

$Q_1$

2

1

4

6

$Q_2$

h

$Q_3$

6

Fig. 2

Fig. 5

Fig. 6